# EUROPEAN PATENT SPECIFICATION

(11) **EP 1 275 569 B1**
(45) Date of publication and mention of the grant of the patent: **02.04.2008**
(21) Application number: 02014867.2
(22) Date of filing: 04.07.2002
(51) Int. Cl.: B60R 22/24

(54) **Seat-belt guide anchor**
Sicherheitsgurt-Umlenkbeschlag
Ferrure de renvoi de ceinture de sécurité

(30) Priority: 11.07.2001 JP 2001210614; 11.01.2002 JP 2002004815
(43) Date of publication of application: 15.01.2003
(73) Proprietor: TAKATA CORPORATION, Minato-ku, Tokyo 106-8510 (JP)
(72) Inventor: Tomita, Hiroshi, Takata Corporation, Tokyo 106-8510 (JP); Nishizawa, Muneo, Takata Corporation, Tokyo 106-8510 (JP)
(74) Representative: Banzer, Hans-Jörg

(56) References cited:
- EP-A- 0 760 316
- DE-A- 2 741 297
- DE-A- 3 008 371
- GB-A- 2 020 541
- US-A- 4 005 904
- US-A- 5 415 432
- US-A- 5 673 936

## Description

### [Technical Field of the Invention]

The present invention belongs to a technical field of a seat-belt guide anchor that is swingably supported on a vehicle body, for example, a pillar, and that slidably guides a seat belt of a seat belt device in the longitudinal direction thereof.

### [Description of the Related Art]

A seat belt device attached to the seat of a vehicle, such as a car, protects a passenger from injury due to a collision with a vehicle body or the like by restraining the passenger with a seat belt in case of an emergency such as a vehicle collision.

Such a seat belt device is provided with a guide anchor that is swingably supported on the inner wall of a vehicle body, for example, a pillar, and that has a belt guide hole for slidably guiding the seat belt in the longitudinal direction thereof. In this case, in general, when the guide anchor is mounted on the vehicle body, the belt guide hole extends in the frontward and rearward direction of the vehicle. The guide anchor allows the seat belt to restrain the passenger in a correct position.

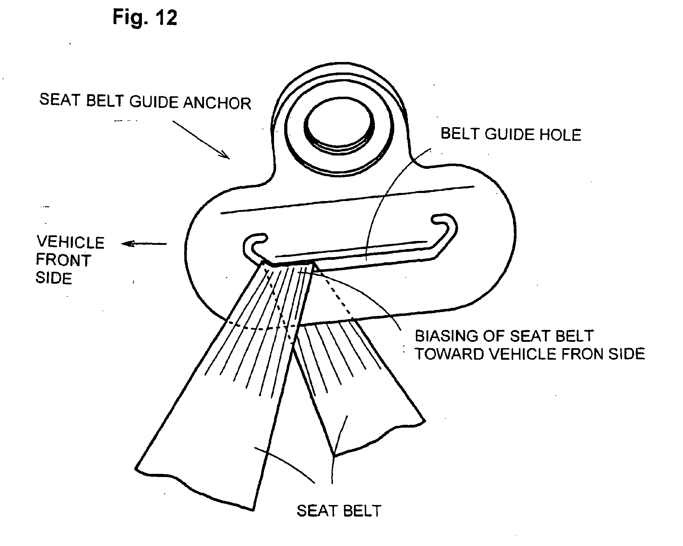

In the guide anchor for the seat belt, when the seat belt is extracted at a relatively higher speed than the usual belt-extraction speed for, for example, wearing the belt, it is sometimes biased to a vehicle-front side end of the belt guide hole, as shown in Fig. 12.

When the seat belt is thus biased to the vehicle-front side end of the belt guide hole, it does not smoothly slide in the belt guide hole, and moreover, it is sometimes troublesome to restore the seat belt.

Accordingly, a guide anchor that prevents a seat belt from being biased to one end of a belt guide hole is proposed on microfilm (hereinafter referred to as a "publication") of Japanese Unexamined Utility Model Application No. Heisei 3-96565 (Japanese Unexamined Utility Model Application Publication No. Heisei 5-44719).

In the guide anchor disclosed in this publication, projections or recesses for preventing the biasing of the seat belt are formed in a portion where the seat belt slides so that they are oriented in the traveling direction of the seat belt, and the seat belt is prevented from being biased by the friction between these projections or recesses and the seat belt.
GB 2 020 541 A discloses a seat belt guide anchor according to the preamble of claim 1 and 3.

### [Problems to be Solved by the Invention]

Hitherto, multiple seat belt devices have been developed in which, in case of an emergency, such as a vehicle collision, a pretensioner is actuated to drive a retractor in the seat-belt winding direction and to thereby wind the seat belt, thereby increasing the force of the seat belt for restraining the passenger. Since the seat belt is also rapidly wound in such winding of the seat belt by the retractor in response to the actuation of the pretensioner, the above-described biasing of the seat belt also sometimes occur. Accordingly, it is possible to prevent the seat belt from being biased from the actuation of the pretensioner by using the guide anchor disclosed in the above publication.

However, when the pretensioner is actuated, the seat belt is wound far more rapidly than disclosed in the above publication. For this reason, it is difficult for the projections or recesses oriented in the seat-belt traveling direction, as disclosed in the above publication, to effectively prevent the seat belt from being biased. Even when the guide anchor in the publication is used, the seat belt may be biased.

Further, multiple seat belt devices have been developed in which an impact to be applied from a seat belt to the passenger is reduced and the load to be imposed on the seat belt is reduced by absorbing and reducing impact energy to be applied to the seat belt by an energy absorption mechanism (hereinafter also referred to as an "EA mechanism") when the drawing of the seat belt is locked by a retractor in case of an emergency, such as a vehicle collision. Energy absorption by the EA mechanism is performed by twisting a torsion bar provided in the retractor. In this case, the seat belt is drawn from the retractor by an amount corresponding to the twisting of the torsion bar.

When the seat belt is thus drawn in response to the actuation of the EA mechanism, since it is also drawn far more rapidly than in normal drawing operation, the above-described biasing of the seat belt may occur similarly. Accordingly, it is possible to prevent the seat belt from being biased from the actuation of the EA mechanism by using the guide anchor disclosed in the above publication, in a manner similar to that in the above case in which the pretensioner is actuated.

However, since the seat belt is also extracted far more rapidly than disclosed in the above publication when the EA mechanism is actuated, it is similarly difficult for the projections or recesses disclosed in the above publication to effectively prevent the biasing of the seat belt.

In this way, it is difficult for the guide anchor disclosed in the above publication to effectively prevent the seat belt from being biased when the seat belt is rapidly extracted and is rapidly retracted in case of an emergency such as a vehicle collision.

The present invention has been made in view of such circumstances, and an object of the invention is to provide a seat-belt guide anchor that can more effectively and more reliably prevent a seat belt from being biased when the seat belt is rapidly drawn and is rapidly wound in case of an emergency such as a vehicle collision.

### [Means for Solving the Problems]

According to the present invention, this object is achieved by a seat-belt guide anchor as defined in claim 1, 2 or 4. The dependent claims define advantageous and preferred embodiments of the present invention.

In order to solve the above problems, a seat-belt guide anchor as claimed in claim 1 provides a seat-belt guide anchor that is swingably supported on a vehicle body, such as a pillar, and that guides a seat belt while the seat belt travels through a belt guide hole so as to slide in the longitudinal direction thereof, wherein a projection or a recess is formed in a sliding portion for the seat belt, a vehicle-rear side end of the projection or a vehicle-rear side end of the sliding portion forming the recess is inclined with respect to an orthogonal direction orthogonal to the belt guide hole disposed in the sliding portion for the seat belt in a state in which the seat-belt guide anchor is mounted on the vehicle body, and the angle of the inclination is set to be more than the inclination angle of the traveling direction of the seat belt through the belt guide hole with respect to the orthogonal direction.

A seat-belt guide anchor as claimed in claim 2 provides a seat-belt guide anchor that is swingably supported on a vehicle body, such as a pillar, and that guides a seat belt while the seat belt travels through a belt guide hole so as to slide in the longitudinal direction thereof, wherein a projection or a recess is formed in a sliding portion for the seat belt, a vehicle-rear side end of the projection or a vehicle-rear side end of the sliding portion forming the recess is inclined with respect to an orthogonal direction orthogonal to the belt guide hole disposed in the sliding portion for the seat belt in a state in which the seat-belt guide anchor is mounted on the vehicle body, and the angle of the inclination is set to be less than the inclination direction of the traveling direction of the seat belt through the belt guide hole with respect to the orthogonal direction, or the direction of the inclination is opposite with respect to the orthogonal direction.

In a seat-belt guide anchor as claimed in claim 3, the projection is shaped like a rib, or the recess is shaped like a concave groove.

A seat-belt guide anchor as claimed in claim 4 provides a seat-belt guide anchor that is swingably supported on a vehicle body, such as a pillar, and that guides a seat belt while the seat belt travels through a belt guide hole so as to slide in the longitudinal direction thereof, wherein multiple projections or multiple recesses are formed in a sliding portion for the seat belt, vehicle-rear side ends of the multiple projections or vehicle-rear side ends of the recesses include a first vehicle-rear side end and a second vehicle-rear side end in a state in which the seat-belt guide anchor is mounted on the vehicle body, the first vehicle-rear side end is inclined with respect to an orthogonal direction orthogonal to the belt guide hole disposed in the sliding portion for the seat belt, the angle of the inclination is set to be more than the inclination angle of the traveling direction of the seat belt through the belt guide hole with respect to the orthogonal direction, the second vehicle-rear side end is inclined with respect to the orthogonal direction orthogonal to the belt guide hole disposed in the sliding portion for the seat belt, and the angle of the inclination is set to be less than the inclination angle of the traveling direction of the seat belt through the belt guide hole with respect to the orthogonal direction, or the direction of the inclination is opposite with respect to the orthogonal direction.

In a seat-belt guide anchor as claimed in claim 5, the vehicle-rear side end of the projection or the vehicle-rear side end of the sliding portion forming the recess is formed of a round portion having a minute diameter or of an edge portion.

Further, in a seat-belt guide anchor as claimed in claim 6, a vehicle-front side end of the projection or a vehicle-front side end of the sliding portion forming the recess is formed of a round portion having a large diameter or of a chamfered portion.

In a seat-belt guide anchor as claimed in claim 7, a vehicle-front side end of the projection or a vehicle-front side end of the sliding portion forming the recess extends in the traveling direction of the seat belt through the belt guide hole.

Further, in a seat-belt guide anchor as claimed in claim 8, a vehicle-front side end of the projection or a vehicle-front side end of the sliding portion forming the recess is formed in a stepped shape by a predetermined number of combinations of first vehicle-front side end portions parallel to the traveling direction of the seat belt through the belt guide hole, and second vehicle-front side end portions perpendicular to the first vehicle-front side end portions.

### [Operation]

In the seat-belt guide anchor as claimed in claim 1 having such a configuration, when the seat belt is rapidly wound, for example, in response to the actuation of a pretensioner in case of an emergency such as a vehicle collision, the movement of the seat belt toward the vehicle front side is inhibited by the vehicle-rear side end of the projection or the vehicle-rear side end of the seat-belt sliding portion forming the recess. This makes it possible to more effectively and more reliably prevent the seat belt from being biased toward the vehicle front side. The seat-belt guide anchor as claimed in claim 1 is suitable particularly for a seat belt device having a pretensioner.

In the seat-belt guide anchor as claimed in claim 2, when the seat belt is drawn while absorbing impact energy, for example, in response to the actuation of an EA mechanism in case of an emergency such as a vehicle collision, the movement of the seat belt toward the vehicle front side is inhibited by the vehicle-rear side end of the projection or the vehicle-rear side end of the seat-belt sliding portion forming the recess. This makes it possible to more effectively and more reliably prevent the seat belt from being biased toward the vehicle front side. The seat-belt guide anchor as claimed in claim 2 is suitable particularly for a seat belt device that does not have a pretensioner, but has an EA mechanism.

Further, in the seat-belt guide anchor as claimed in claim 3, since the projection is shaped like a rib or the recess is shaped like a concave groove, the structure is simplified, and production is facilitated.

In the seat-belt guide anchor as claimed in claim 4, when the seat belt is rapidly wound, for example, in response to the actuation of a pretensioner in case of an emergency such as a vehicle collision, the movement of the seat belt toward the vehicle front side is inhibited by the first vehicle-rear side ends of the projections or the first vehicle-rear side ends of the seat-belt sliding portion forming the recesses. Furthermore, when the seat belt is drawn while absorbing impact energy, for example, in response to the actuation of an EA mechanism in case of an emergency such as a vehicle collision, the movement of the seat belt toward the vehicle front side is inhibited by the second vehicle-rear side ends of the projections or the second vehicle-rear side ends of the seat-belt sliding portion forming the recesses. This makes it possible to more effectively and more reliably prevent the seat belt from being biased toward the vehicle front side. The seat-belt guide anchor as claimed in claim 4 is suitable particularly for a seat belt device that has at least one of a pretensioner and an EA mechanism.

In the seat-belt guide anchor as claimed in claim 5, since the vehicle-rear side end of the projection or the vehicle-rear side end of the sliding portion forming the recess is formed of a round portion having a minute diameter or of an edge portion, the movement of the seat belt toward the vehicle front side is more effectively inhibited by a reactive force produced from the vehicle-rear side end by the friction between the vehicle-rear side end and the seat belt.

In the seat-belt guide anchor as claimed in claim 6, since the vehicle-front side end of the projection or the vehicle-front side end of the sliding portion forming the recess is formed of a round portion having a large diameter or of a chamfered portion, little friction occurs between the vehicle-front side end and the seat belt, and the movement of the seat belt toward the vehicle front side due to the vehicle-front side end is inhibited.

In the seat-belt guide anchor as claimed in claim 7, since the vehicle-front side end of the projection or the vehicle-front side end of the sliding portion forming the recess extends in the traveling direction of the seat belt through the belt guide hole, little friction occurs between the vehicle-front side end and the seat belt, and the movement of the seat belt toward the vehicle front side due to the vehicle-front side end is inhibited.

In the seat-belt guide anchor as claimed in claim 8, since the vehicle-front side end of the projection or the vehicle-front side end of the sliding portion forming the recess is formed in a stepped shape by a predetermined number of combinations of first vehicle-front side end portions parallel to the traveling direction of the seat belt through the belt guide hole and second vehicle-front side end portions perpendicular to the first vehicle-front side end portions, a force for moving the seat belt toward the vehicle front side is not produced by the vehicle-front side end. Therefore, when the seat belt is drawn, the turning of the guide anchor is inhibited, and the movement of the seat belt toward the vehicle front side is inhibited.

### [Brief Description of the Drawings]

Figs. 1(a), 1(b), and 1(c) show a seat-belt guide anchor according to a first embodiment of the present invention, Fig. 1(a) is a view of the guide anchor of the first embodiment, Fig. 1(b) is a partially enlarged view of a section IB in Fig. 1(a), and Fig. 1(c) is a partially enlarged view, similar to Fig. 1(b), showing a modification of a section IB.

Figs. 2(a) and 2(b) show the operation of the guide anchor of the first embodiment, Fig. 2(a) is an explanatory view showing an operating state of a pretensioner, and Fig. 2(b) is an explanatory view showing an operating state of the pretensioner.

Fig. 3 is a view of a guide anchor according to a second embodiment of the present invention, in a manner similar to that in Fig. 1(a).

Figs. 4(a) and 4(b) show a guide anchor according to a third embodiment of the present invention, Fig. 4(a) is a partial view of the guide anchor shown in a manner similar to that in Fig. 1(a), and Fig. 4(b) is a partially enlarged view of a section IVB in Fig. 4(b).

Fig. 5 is a partial view of a guide anchor according to a fourth embodiment of the present invention, in a manner similar to that in Fig. 4(a).

Figs. 6(a) and 6(b) show a guide anchor according to a fifth embodiment of the present invention, Fig. 6(a) is a partial view similar to Fig. 4(a), and Fig. 6(b) is a partially enlarged sectional view, taken along lines VIB₁-VIB₁ and VIB₂-VIB₂ in Fig. 6(a).

Figs. 7(a) and 7(b) show a guide anchor according to a sixth embodiment of the present invention, Fig. 7(a) is a partial view similar to Fig. 4(a), and Fig. 7(b) is a partially enlarged sectional view, taken along lines VIIB-VIIB in Fig. 7(a).

Figs. 8(a) and 8(b) show a guide anchor according to a seventh embodiment of the present invention, Fig. 8(a) is a partial view similar to Fig. 4(a), and Fig. 8(b) is a partially enlarged view of a section VIIIB in Fig. 8(a).

Figs. 9(a) and 9(b) show a guide anchor according to an eighth embodiment of the present invention, Fig. 9(a) is a partial view similar to Fig. 4(a), and Fig. 9(b) is a partially enlarged sectional view, taken along lines IXB1-IXB12 and IXB2-IXB12 in Fig. 9(a).

Figs. 10(a), 10(b), and 10(c) show a guide anchor according to a ninth embodiment of the present invention, Fig. 10(a) is a partial view similar to Fig. 4(a), Fig. 10(b) is a partially enlarged sectional view, taken along line XB-XB in Fig. 10(a), and Fig. 10(c) is a partially enlarged sectional view, taken along line XC-XC in Fig. 10(a).

Figs. 11(a), 11(b), and 11(c) show a guide anchor according to a tenth embodiment of the present invention, Fig. 11(a) is a partial view similar to Fig. 4(a), Fig. 11(b) is a partially enlarged sectional view, taken along line XIB-XIB in Fig. 11(a), and Fig. 11(c) is a partially enlarged sectional view, taken along line XIC-XIC in Fig. 11(a).

Fig. 12 is an explanatory view showing the operation of a conventional seat-belt guide anchor.

### [Description of the Embodiments]

Embodiments of the present invention will be described below with reference to the drawings.

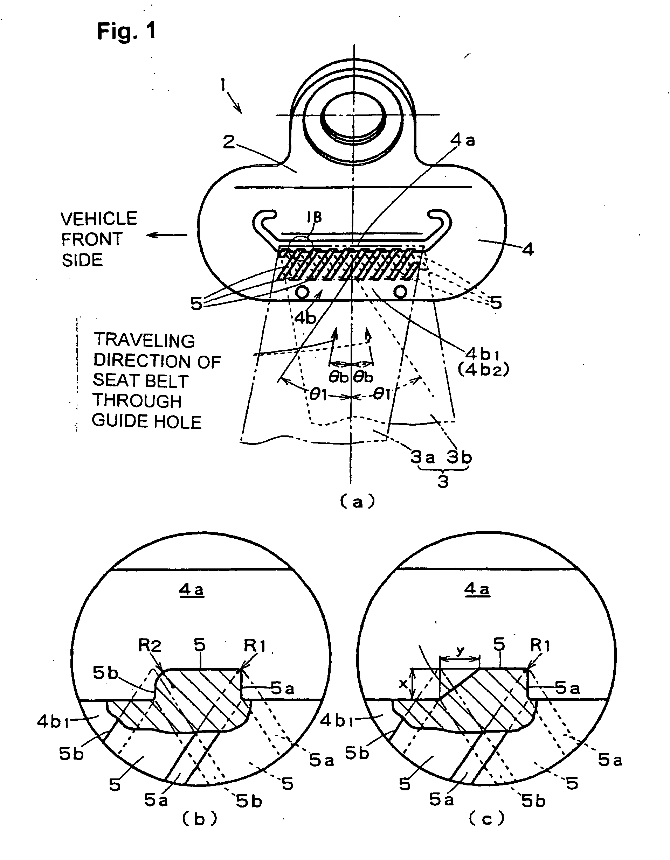

Figs. 1(a) and 1(b) show a seat-belt guide anchor according to a first embodiment of the present invention, Fig. 1(a) is a view of the guide anchor of the first embodiment, and Fig. 1(b) is a partially enlarged view of a section IB in Fig. 1(a).

As shown in Fig. 1(a), a seat-belt guide anchor 1 of the first embodiment comprises a mounting section 2 having a mounting hole 2a through which a fastener, such as a bolt, for swingably mounting the guide anchor 1 to a vehicle body, and a belt guide section 4 having a belt guide hole 4a for guiding a seat belt 3 that is slidably passed therethrough. The mounting section 2 and the belt guide section 4 are formed by bending so that they are at a predetermined angle to each other. The guide anchor 1 may be made of only resin, may be formed by attaching a belt guide section 4 separately made of resin or metal as a strength member and molded together, or may be made of only metal.

As shown in Fig. 1(a), a predetermined number of (ten in the illustration) ribs (corresponding to projections in the present invention) 5 of a fixed width are formed on a sliding portion 4b for the seat belt 3 in the belt guide section 4 including the belt guide hole 4a. These ribs 5 are continuously formed from a sliding portion 4b₁ in which a passenger-side portion of the seat belt 3 slides (front side in the figure) to a sliding portion 4b₂ in which a retractor-side portion of the seat belt 3 slides (rear side in the figure) (the ribs 5 at the right and left ends are not always formed on both sides 4b₁ and 4b₂ of the sliding portion 4b outside a sliding area of the seat belt 3).

In each of the ribs 5, a portion thereof in the sliding portion 4b₁ (a portion shown by a solid line in the figure) extends toward the vehicle front side so as to be inclined downward, and a portion thereof in the sliding portion 4b₂ (a portion shown by a dotted line in the figure) extends toward the vehicle rear side so as to be inclined downward. The guide anchor 1 of the first embodiment is adapted particularly to a seat belt device in which a retractor winds up the seat belt 3 by a predetermined amount in response to the actuation of a pretensioner in the above-described case of an emergency. In the case of a seat belt device in which an EA mechanism is actuated after a pretensioner is actuated in the above emergency, various experiments proved that the seat belt 3 is rarely biased from the actuation of the EA mechanism when it is not biased from the actuation of the pretensioner. Therefore, the guide anchor 1 of the first embodiment is also suitable for such a seat belt device. The guide anchor 1 of the first embodiment is, of course, also suitable for a seat belt device that does not have a pretensioner and an EA mechanism.

The inclination angle θ₁ of each of the ribs 5 formed in the sliding portion 4b₁ with respect to the upward and downward direction in Fig. 1(a), that is, to an orthogonal direction orthogonal to the belt guide hole 4a positioned in the sliding portion 4b for the seat belt 3 is set to be a predetermined angle larger than the inclination angle θ_{b} of the traveling direction the passenger-side portion 3a of the seat belt 3 through the belt guide hole 4a (shown by a solid arrow in the figure) with respect to the upward and downward direction in the figure (the inclination angle of the longitudinal direction of the passenger-side portion 3a of the seat belt 3 with respect to the upward and downward in the figure). The inclination angle θ_{b} also corresponds to the inclination angle of the direction of drawing of the seat belt 3 by the EA operation.

Similarly, the inclination angle θ₁ of each of the ribs 5 formed in the sliding portion 4b₂ with respect to the upward and downward direction in Fig. 1(a) is set to be a predetermined angle larger than the inclination angle θ_{b} of the traveling direction the retractor-side portion 3b of the seat belt 3 through the belt guide hole 4a (shown by a dotted arrow in the figure) with respect to the upward and downward direction in the figure (the inclination angle of the longitudinal direction of the retractor-side portion 3b of the seat belt 3 with respect to the upward and downward in the figure). Both the angles θ₁ and θ_{b} are expressed in the absolute value. This also applies to all the angles that will be described in the following other embodiments.

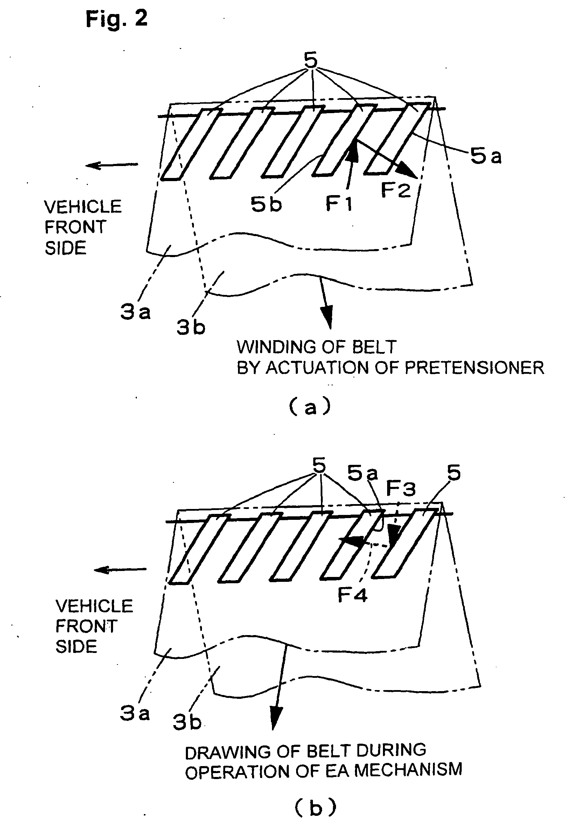

These predetermined angles will be described, for example, in the sliding portion 4b₁. The predetermined angle is set at an angle such that a force F₁ which the passenger-side portion 3a of the seat belt 3 exerts on vehicle-rear side ends 5a of the ribs 5 is produced by the friction between the passenger-side portion 3a of the seat belt 3 and the vehicle-rear side ends 5a of the ribs 5a when the seat belt is wound by the actuation of the pretensioner, and such that a reactive force F2 is produced which acts on the passenger-side portion 3a of the seat belt 3 so as not to move the seat belt 3 to the vehicle front side (leftward in the figure), as shown in Fig. 2(a). This also applies to the sliding portion 4b₂. In Fig. 2(a), the arrows of the forces F₁ and F₂ represent only the directions of the forces F₁ and F₂, and do not represent the magnitudes of the forces F₁ and F₂.

As shown in Fig. 1(b), the vehicle-rear side end 5a of the rib 5 is formed of a round portion having a minute diameter R₁, or of an edge portion (cusp). The minute diameter R₁ is determined so that the above-described reactive force F₂, which has a magnitude such as not to move the seat belt 3 to the vehicle front side, reliably acts on the seat belt 3. A vehicle-front side end 5b of the rib 5 is formed of a round portion having a relatively large diameter R₂. As shown in Fig. 1(c), the vehicle-front side end 5b of the rib 5 may be formed of a chamfered portion chamfered along the sides x and y, instead of the round portion having a relatively large diameter R₂.

The large diameter R₂ or the chamfering is determined so that little friction occurs between the seat belt 3 and the vehicle-front side end 5b of the rib 5 when the belt is drawn in response to the above-described actuation of the EA mechanism, as shown in Fig. 2(b), that is, so that the force F₃ which the seat belt 3 exerts on the vehicle-front side end 5b of the rib 5, is rarely produced (while the force F₃ is shown by a dotted line in the figure, it is virtually shown only for convenience of explanation), and so that a reactive force, which acts on the seat belt 3 so as to move the seat belt 3 to the vehicle front side (leftward in the figure), is not produced (substantially, to a degree to which little reactive force arises) (while the reactive force F₄ is shown by a dotted line in the figure, it is virtually shown only for convenience of explanation).

In the chamfered portion shown in Fig. 1(c), as the side y becomes longer than the side x, it is more difficult for the seat belt 3 to be caught by the vehicle-front side end 5b of the rib 5 during the operation of the EA mechanism, that is, less friction is produced between the seat belt 3 and the vehicle-front side end 5b of the rib 5. Therefore, it is preferable that the side y be set to be longer than the side x. While the chamfered portion shown in Fig. 1(c) is formed so that the vehicle-front side end 5b does not remain, it may be formed so that a part of the vehicle-front side end 5b remains.

In the guide anchor 1 of the first embodiment having such a configuration, when a pretensioner is actuated in the above-described case of an emergency and the seat belt 3 is rapidly wound, as shown in Fig. 2(a), the seat belt 3 is inhibited by the above reactive force F₂ from the ribs 5 from moving toward the vehicle-front side end of the guide hole 4a. This makes it possible to more effectively and more reliably prevent the seat belt 3 from being biased to the vehicle front side when being rapidly wound by the activation of the pretensioner.

Even in a case in which the seat belt 3 is drawn more rapidly than in the usual seat drawing operation, as is disclosed in the above publication, it is, of course, inhibited by the above reactive force F₂ from moving toward the vehicle-front side end of the guide hole 4a.

In the guide anchor 1 of the first embodiment, in a case in which the retractor has an EA mechanism, little friction is produced between the seat belt 3 and the vehicle-front side ends 5b of the ribs 5 when the seat belt 3 is drawn during the operation of the EA mechanism in the above case of an emergency, and little reactive force to the force F₃ which the seat belt 3 exerts on the vehicle-front side ends 5b of the ribs 5 is produced by the friction, as described above. Therefore, even when the ribs 5 are formed, the force for moving the seat belt 3 toward the vehicle front side is hardly produced from the ribs 5, the seat belt 3 is smoothly drawn by the actuation of the EA mechanism of the seat belt 3, and more reliable energy absorption is possible.

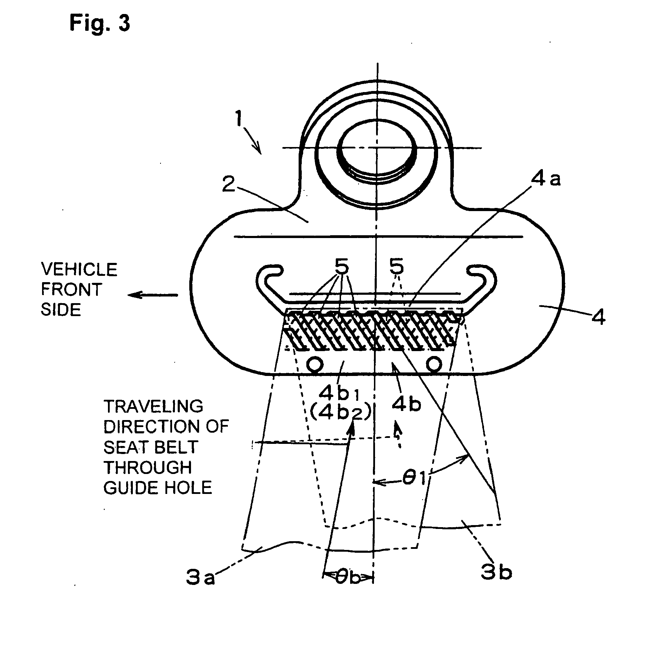

Fig. 3 is a view, similar to Fig. 1(a), showing a guide anchor according to a second embodiment of the present invention.

As shown in Fig. 3, in a guide anchor 1 of the second embodiment, ribs 5 are formed in line symmetry with the ribs 5 of the guide anchor 1 of the above first embodiment in the upward and downward direction in the figure so that they are inclined in the direction opposite from that in the first embodiment. That is, in the second embodiment, the inclination angle θ₂ of the ribs 5 with respect to the upward and downward direction in the figure is set to be equal to the inclination angle θ₁ of the ribs 5 in the above first embodiment. The inclination angle θ₂ of the ribs 5 in the second embodiment may, of course, be set to be different from the inclination angle θ₁ of the ribs 5 in the above first embodiment.

Other structures of the guide anchor 1 of the second embodiment are the same as those in the above first embodiment. The guide anchor 1 of the second embodiment is adapted particularly to a seat belt device which does not have a pretensioner and in which a seat belt 3 is drawn by a predetermined amount by EA operation of an EA mechanism in the above case of an emergency. The guide anchor 1 of the second embodiment is, of course, also suitable for a seat belt device that does not have a pretensioner and an EA mechanism.

In the guide anchor 1 of the second embodiment having such a configuration, when the seat belt 3 is drawn during the EA operation, it exerts a force (corresponding to the above-described force F₁) on vehicle-rear side ends 5a of the ribs 5 due to the friction between the vehicle-rear side ends 5a of the ribs 5, in a manner similar to that in the case in which the pretensioner is actuated in the above first embodiment, and a reactive force thereto (corresponding to the above-described reactive force F₂) prevents the seat belt 3 from moving toward the vehicle front side.

Since little friction is caused between vehicle-front side ends 5b of the ribs 5 and the seat belt 3 when the seat belt 3 is wound, little friction is also caused between the vehicle-rear side ends 5a of the ribs 5 and the seat belt 3, in a manner similar to that in the above-described state in which the EA mechanism is actuated in case of an emergency in the first embodiment. Therefore, the seat belt 3 exerts little force (corresponding to the above-described force F₃) on the vehicle-rear side ends 5a of the ribs 5 due to the friction, and a reactive force thereto (corresponding to the above-described reactive force F₄), that is, the force for moving the seat belt 3 toward the vehicle front side, is not produced.

Other operation-effects of the guide anchor 1 of the second embodiment are substantially the same as those in the above-described first embodiment.

The ribs 5 in the second embodiment need not be always inclined in line symmetry with and in the direction opposite from the first embodiment, and it is satisfactory as long as the extending direction of the ribs 5 formed in a sliding portion 4b₁ is shifted counterclockwise by a predetermined angle from the traveling direction of the seat belt 3 through the belt guide hole. That is, it is satisfactory as long as the inclination angle of the vehicle-rear side ends 5a of the ribs 5 is set to be smaller than the inclination angle θ_{b} of the traveling direction of the seat belt 3 through belt guide hole with respect to the upward and downward direction in the figure, or as long as the direction of the inclination with respect to the upward and downward direction is opposite. The traveling direction of the seat belt 3 through the belt guide hole is different from the belt traveling direction when the pretensioner is actuated in the first embodiment, but is the same as the direction of drawing of the seat belt 3 by the EA operation.

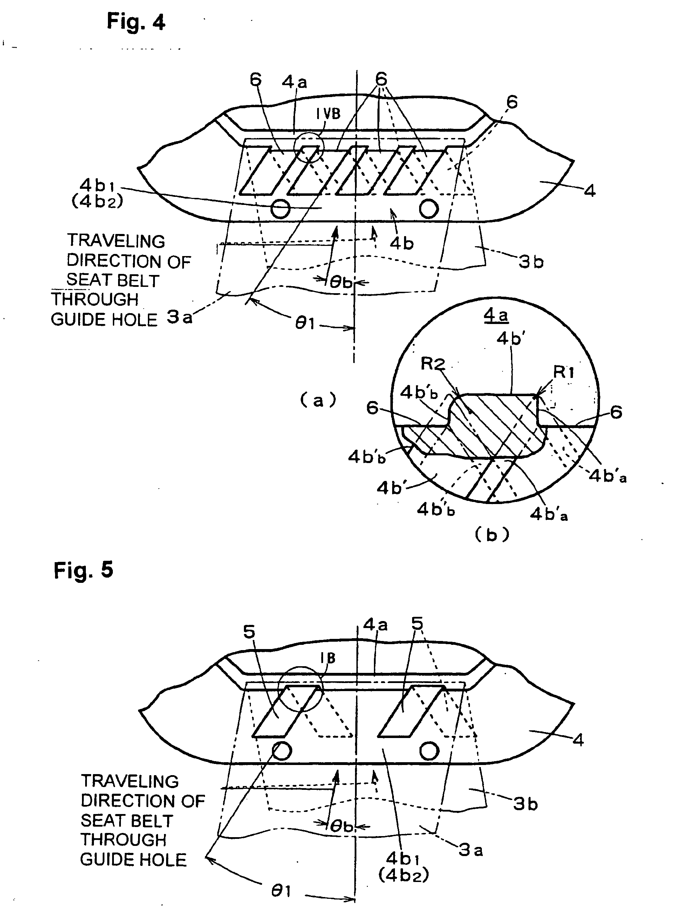

Figs. 4(a) and 4(b) show a guide anchor according to a third embodiment of the present invention, Fig. 4(a) is a partial view of the guide anchor shown in a manner similar to that in Fig. 1(a), and Fig. 4(b) is a partially enlarged view of a section IVB in Fig. 4(a).

As shown in Fig. 4(a), in a guide anchor 1 of the third embodiment, a seat-belt sliding portion 4b is provided with a predetermined number of concave grooves (corresponding to the recesses in the present invention) 6 that are inclined in a manner similar to that of the ribs 5 in the above first embodiment, instead of the ribs 5. As shown in Fig. 4(b), vehicle-rear side ends 4b'ₐ of seat-belt sliding portions 4b' forming the concave grooves 6 are formed of a round portion having a minute diameter R₁ or of an edge portion, in a manner similar to that of the vehicle-rear side ends 5a of the ribs 5 in the above first embodiment. Vehicle-front side ends 4b'_{b} of the seat-belt sliding portions 4b' forming the concave grooves 6 are formed of a round portion having a large diameter R₂ in a manner similar to that of the vehicle-front side ends 5b of the ribs 5 in the above first embodiment, or of a chamfered portion (not shown) similar to that in the first embodiment.

Other structures of the guide anchor 1 of the third embodiment are the same as those in the above first embodiment.

In the guide anchor 1 of the third embodiment having such a configuration, the seat-belt sliding portion 4b' that forms the concave grooves 6 serves the same functions as those of the ribs 5 in the first embodiment.

Therefore, the guide anchor 1 of the third embodiment also provides advantages similar to those of the first embodiment.

The guide anchor 1 of the third embodiment is suitable particularly for a seat belt device in which a seat belt is wound by a pretensioner, in a manner similar to that in the first embodiment. For a seat belt device that does not have a pretensioner, but has an EA mechanism, the inclination direction of the concave grooves 6 is made opposite from that in the third embodiment, in a manner similar to that in the above second embodiment shown in Fig. 3.

Fig. 5 is a partial view, similar to Fig. 4(a), showing a guide anchor according to a fourth embodiment of the present invention.

As shown in Fig. 5, in a guide anchor 1 of the fourth embodiment, a smaller number of ribs 5 than the ribs 5 in the above first embodiment (two in the illustration) are formed in a seat-belt sliding portion 4b. The interval between the ribs 5 is set to be larger than that of the ribs 5 in the first embodiment.

Other structures of the guide anchor 1 of the fourth embodiment are the same as those in the above first embodiment. Moreover, operation-effects of the guide anchor 1 of the fourth embodiment are also substantially the same as those in the above first embodiment.

The guide anchor 1 of the fourth embodiment is suitable particularly for a seat belt device in which a seat belt is wound by a pretensioner, in a manner similar to that in the guide anchor 1 of the first embodiment. For a seat belt device that does not have a pretensioner, but has an EA mechanism, the inclination direction of the ribs 5 is made opposite from that in the first embodiment, in a manner similar to that in the above second embodiment shown in Fig. 3.

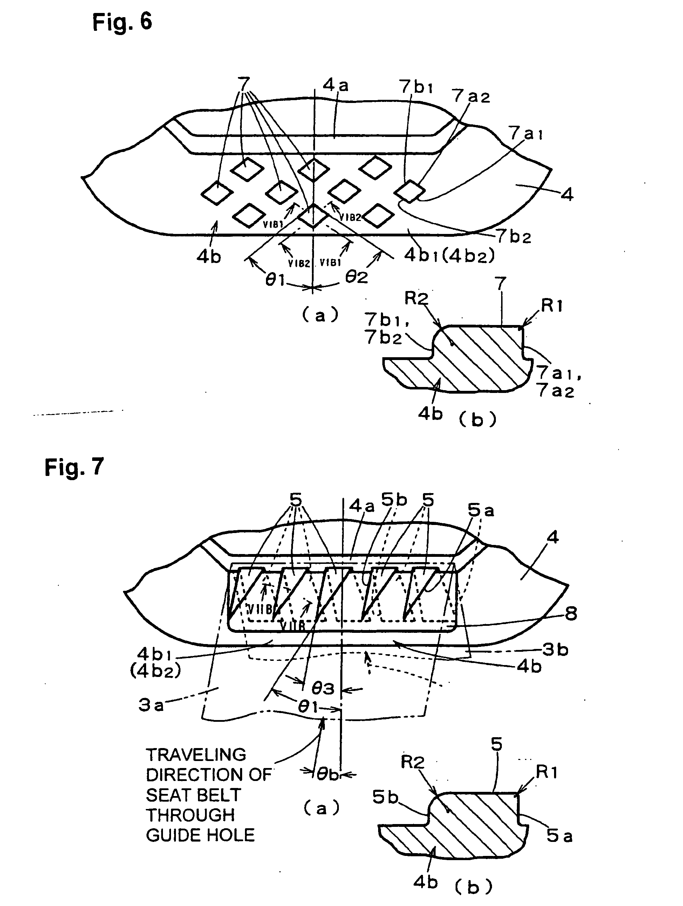

Figs. 6(a) and 6(b) show a guide anchor according to a fifth embodiment of the present invention, Fig. 6(a) is a partial view similar to Fig. 4(a), and Fig. 6(b) is a partially enlarged sectional view, taken along lines VIB₁-VIB₁ and VIB₂-VIB₂ in Fig. 6(a).

As shown in Fig. 6(a), in a guide anchor 1 of the fifth embodiment, a seat-belt sliding portion 4b is provided with a predetermined number of parallelogrammatic projections (corresponding to the projections in the present invention) 7 formed of overlapping portions of the ribs 5 of the first embodiment shown in Fig. 1(a) and the ribs 5 of the second embodiment shown in Fig. 3 (the inclination angle θ₁ ≠ the inclination angle θ₂ in this case). When the inclination angle θ₁ = the inclination angle θ₂, the projections 7 are rhombic.

As shown in Fig. 6(b), vehicle-rear side ends 7a₁ and 7a₂ of the projections 7 in the fifth embodiment (respectively corresponding to the first vehicle-rear side end and the second vehicle-rear side end in the present invention) are both formed of a round portion having a minute diameter R₁ or of an edge portion, in a manner similar to that in the first embodiment, and vehicle-front side ends 7b₁ and 7b₂ of the projections 7 are both formed of a round portion having a large diameter R₂ in a manner similar to that in the above first embodiment, or of a chamfered portion similar to that in the first embodiment. The vehicle-rear side ends 7a₁ have operation-effects substantially similar to those of the vehicle-rear side ends 5a₁ in the first embodiment, and the vehicle-rear side ends 7a₂ have operation-effects substantially similar to those of the vehicle-rear side ends 5a₁ in the second embodiment. The vehicle-front side ends 7b₁ have operation-effects substantially similar to those of the vehicle-front side ends 5b₁ in the first embodiment, and the vehicle-front side ends 7b₂ have operation-effects substantially similar to those of the vehicle-front side ends 5b₁ in the second embodiment. While the projections 7 are formed on the front side of the sliding portion 4b of the seat belt 3 in Fig. 6(a), projections 7 are, of course, also formed on the rear side of the sliding portion 4b of the seat belt 3.

Other structures of the guide anchor 1 of the fifth embodiment are similar to those in the first embodiment. The operation-effects of the guide anchor 1 of the fifth embodiment correspond to a combination of the operation-effects of the guide anchor 1 of the first embodiment and the operation-effects of the guide anchor 1 of the second embodiment. Therefore, the guide anchor 1 of the fifth embodiment is suitable particularly for a seat belt device that has at least one of a pretensioner and an EA mechanism. Other operation-effects of the guide anchor 1 of the fifth embodiment are similar to those in the first embodiment and the second embodiment.

While multiple projections 7 are aligned along the ribs 5 in the first embodiment and the second embodiment, they need not be always aligned, but may be arranged at random.

Instead of the projections 7 in the guide anchor 1 in the fifth embodiment, parallelogrammatic recesses having a shape similar to that of the projections 7 may be arranged with the projections 7, in a manner similar to that in the concave grooves of the third embodiment. In this case, each side of the parallelogrammatic projections 7 needs to be made relatively long in order to more effectively prevent the seat belt 3 from being biased. In this case, the vehicle-rear side ends of the sliding portions 4b forming the recesses are formed of a round portion having a minute diameter R₁ or of an edge portion, and the vehicle-front side ends of the sliding portions 4b forming the recesses are formed of a round portion having a large diameter R₂, in a manner similar to that in the concave grooves of the third embodiment.

Figs. 7(a) and 7(b) show a guide anchor according to a sixth embodiment of the present invention, Fig. 7(a) is a partial view similar to Fig. 4(a), and Fig. 7(b) is a partially enlarged sectional view, taken along line VIIB-VIIB in Fig. 7(a).

As shown in Fig. 7(a), in a guide anchor 1 of the sixth embodiment, a guide piece 8 having ribs 5 and made of, for example, Cr is mounted on a belt sliding portion 4b. In the ribs 5 of the sixth embodiment, the inclination angle θ₁ of vehicle-rear side ends 5a of the ribs 5 in the sixth embodiment shown in Fig. 7(a) is set to be larger than the inclination angle θ_{b} of the traveling direction of the seat belt 3 through the belt guide hole, that is, the direction of drawing of the seat belt 3 by the EA operation, in a manner similar to that in the first embodiment. The inclination angle θ₃ of vehicle-front side ends 5b of the ribs 5 in the sixth embodiment is set to be equal to the inclination angle θ_{b} of the traveling direction of the seat belt 3 through the belt guide hole (θ₃ = θ_{b}), which is different from the first embodiment. That is, the vehicle-front side ends 5b of the ribs 5 in the sixth embodiment extend in the traveling direction of the seat belt 3 through the belt guide hole, and the width of the ribs 5 in the sixth embodiment is set so that it continuously changes. Therefore, the ribs 5 formed in a sliding portion 4b₂ are trapezoidal, as shown by dotted lines in the figure. While the ribs 5 in a sliding portion 4b₁ shown in Fig. 7(a) are shaped like an inverted triangle, they may be shaped like an inverted trapezoid.

As shown in Fig. 7(b), all the vehicle-rear side ends 5a of the ribs 5 in the sixth embodiment are formed of a round portion having a minute diameter R₁ or of an edge portion, in a manner similar to that in the above first embodiment, and all the vehicle-front side ends 5b of the projections 5 are formed of a round portion having a large diameter R₂ or of a chamfered portion, in a manner similar to that in the above first embodiment. The vehicle-rear side ends 5a have operation-effects substantially similar to those of the vehicle-rear side ends 5a in the first embodiment. Since the inclination angles θ₃ and θ_{b} are set to be equal to each other, a reactive force for moving the seat belt 3 toward the vehicle front side does not act from the vehicle-front side ends 5b onto the seat belt 3 when the seat belt 3 is drawn during the operation of the EA mechanism. Moreover, a reactive force for moving the seat belt 3 toward the vehicle front side does not act because of the round portion having a large diameter R₂, in a manner similar to that in the above first embodiment.

Since the reactive force for moving the seat belt 3 toward the vehicle front side does not act from the vehicle-front side ends 5b onto the seat belt 3 when the seat belt 3 is drawn during the operation of the EA mechanism, the round portions at the vehicle-front side ends 5b may be formed of a round portion having a minute diameter R₁ or of an edge portion, depending on the circumstances.

Other structures and other operation-effects of the guide anchor 1 of the sixth embodiment are similar to those in the first embodiment. The guide anchor 1 of the sixth embodiment is suitable particularly for a seat belt device having a pretensioner, in a manner similar to that in the first embodiment.

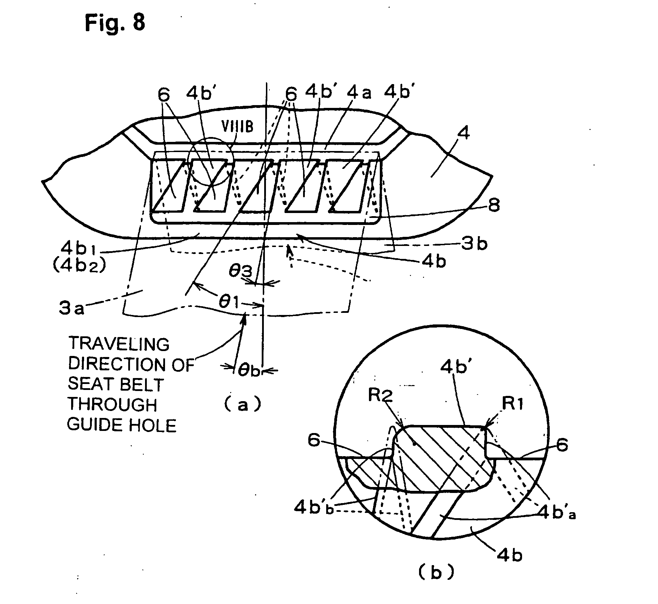

Figs. 8(a) and 8(b) show a guide anchor according to a seventh embodiment of the present invention, Fig. 8(a) is a partial view similar to Fig. 4(a), and Fig. 8(b) is a partially enlarged view of a section VIIIB in Fig. 8(a).

As shown in Fig. 8(a), in a guide anchor 1 of the seventh embodiment, a predetermined number of concave grooves 6, which are inclined in a manner similar to that of the ribs 5 in the above sixth embodiment shown in Fig. 7, are formed in a seat-belt sliding portion 4b, instead of the ribs 5. In this case, the inclination angle θ₁ of vehicle-rear side ends 4b'ₐ of seat-belt sliding portions 4b' forming the concave grooves 6 with respect to the upward and downward direction in the figure is set to be larger than the inclination angle θ_{b} of the traveling direction of a seat belt 3. The inclination angle θ₃ of vehicle-front side ends 4b'_{b} of the seat-belt sliding portions 4b' forming the concave grooves 6 with respect to the upward and downward direction in the figure is set to be equal to the inclination angle θ_{b} of the traveling direction of the seat belt 3 (θ₃ = θ_{b}).

As shown in Fig. 8(b), the vehicle-rear side ends 4b'ₐ of the seat-belt sliding portions 4b' forming the concave grooves 6 are formed of a round portion having a minute diameter R₁ or of an edge portion, in a manner similar to that of the vehicle-rear side ends 5a of the ribs 5 in the above first embodiment. The vehicle-front side ends 4b'_{b} of the seat-belt sliding portions 4b' forming the concave grooves 6 are formed of a round portion having a large diameter R₂ in a similar to that of the vehicle-front side ends 5b of the ribs 5 in the above first embodiment, or of a chamfered portion similar to that in the first embodiment.

Other structures of the guide anchor 1 of the seventh embodiment are the same as those in the above first embodiment, and operation-effects of the guide anchor 1 of the seventh embodiment are substantially the same as those of the above sixth embodiment.

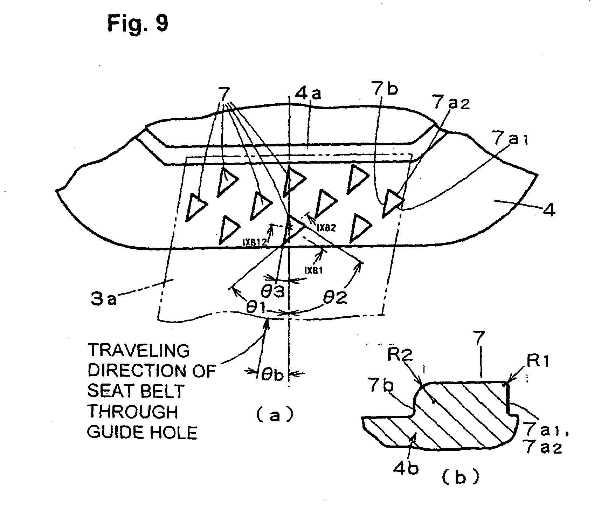

Figs. 9(a) and 9(b) show a guide anchor according to an eighth embodiment of the present invention, Fig. 9(a) is a partial view similar to Fig. 4(a), and Fig. 9(b) is a partially enlarged view, taken along lines IXBI-IXB12 and IXB2-IXB12 in Fig. 9(a).

While the projections 7 of the guide anchor 1 of the above fifth embodiment shown in Fig. 6(a) are shaped like a parallelogram, projections 7 in a guide anchor 1 of the eighth embodiment are shaped like a triangle, as shown in Fig. 9(a). In this case, vehicle-rear side ends 7a₁ and 7a₂ of the projections 7 in the eighth embodiment are similar to the vehicle-rear side ends 7a₁ and 7a₂ in the above fifth embodiment, and vehicle-front side ends 7b of the projections 7 in the eighth embodiment are similar to the vehicle-front side ends 7b of the above sixth embodiment shown in Fig. 7(a).

As shown in Fig. 9(b), the vehicle-rear side ends 7a₁ and 7a₂ of the projections 7 are formed of a round portion having a minute diameter R₁ or of an edge portion, in a manner similar to that in the above first embodiment, and the vehicle-front side ends 7b of the projections 7 are formed of a round portion having a large diameter R₂ in a manner similar to that in the above first embodiment, or of a chamfered portion similar to that in the first embodiment. The vehicle-rear side ends 7a₁ have operation-effects substantially similar to those of the vehicle-rear side ends 5a₁ in the first embodiment, the vehicle-rear side ends 7a₂ have operation-effects substantially similar to those of the vehicle-rear side ends 5a₁ in the second embodiment, and the vehicle-front side ends 7b have operation-effects substantially similar to those of the vehicle-front side ends 5b in the sixth embodiment. While Fig. 9(a) shows that the projections 7 are formed on the front side of a sliding portion 4b for a seat belt 3, projections 7 are, of course, also formed on the rear side of the sliding portion 4b for the seat belt 3.

Other structures of the guide anchor 1 of the eighth embodiment are similar to those in the first embodiment. Operation-effects of the guide anchor 1 of the eighth embodiment correspond to a combination of the operation-effects of the vehicle-rear side ends 7a₁ and 7a₂ of the projections 7 in the guide anchor of the fifth embodiment and the operation-effect of the vehicle-front side ends 7b of the projections 7 of the guide anchor of the sixth embodiment. Therefore, the guide anchor 1 of the eighth embodiment is suitable for a seat belt device that has at least one of a pretensioner and an EA mechanism.

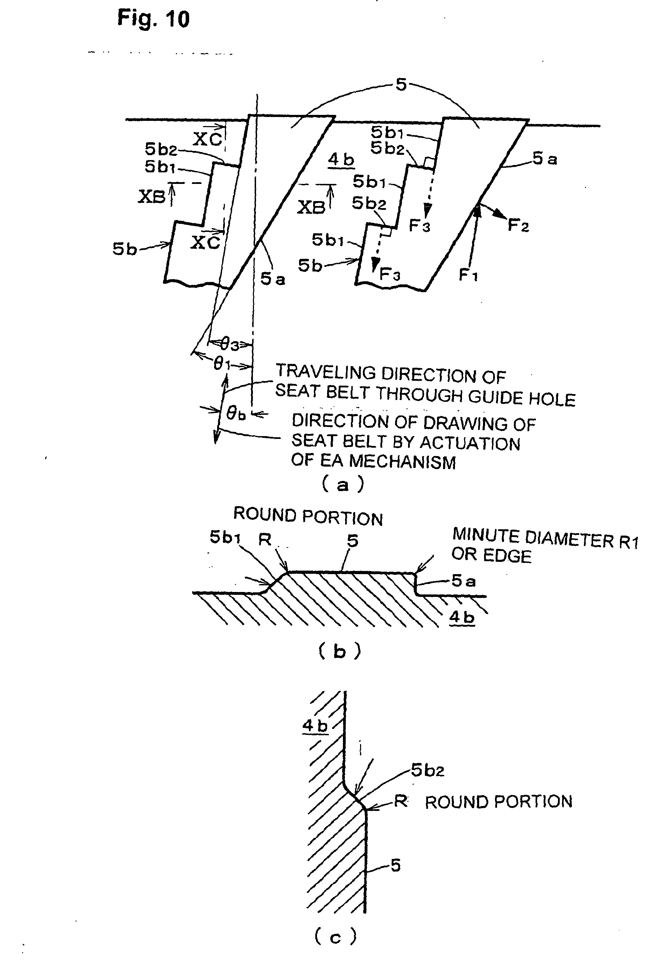

Figs. 10(a), 10(b), and 10(c) show a guide anchor according to a ninth embodiment of the present invention, Fig. 10(a) is a partial view similar to Figs. 2(a) and 2(b), Fig. 10(b) is a partially enlarged sectional view, taken along line XB-XB in Fig. 10(a), and Fig. 10(c) is a partially enlarged sectional view, taken along line XC-XC in Fig. 10(a).

While the vehicle-front side ends 5b of the ribs 5 are linearly formed in the sixth embodiment shown in Fig. 7, vehicle-front side ends 5b of ribs 5 in a guide anchor 1 of the ninth embodiment are formed in a stepped shape by a predetermined number of combinations of first vehicle-front side end portions 5b₁ having the same inclination angle θ₃ as that of the vehicle-front side ends 5b of the sixth embodiment and second vehicle-front side end portions 5b₂ disposed at right angles to the first vehicle-front side end portions 5b₁, as shown in Fig. 10(a). In this case, the relationship among the inclination angle θ₁ of vehicle-rear side ends 5a, the inclination angle θ₃ of the first vehicle-front side end portions 5b₁, and the inclination angle of the traveling direction of a seat belt 3 through a belt guide hole, that is, the inclination angle θ_{b} of the direction of drawing of the seat belt 3 by the operation of the EA mechanism (the belt drawing direction is opposite from the traveling direction through the belt guide hole) is set so that θ₃ = θ_{b} < θ₁, in a manner similar to that in the sixth embodiment. Therefore, the direction of drawing of the seat belt 3 by the operation of the EA mechanism and the first vehicle-front side end portions 5b₁ are in parallel with each other, and the direction of drawing of the seat belt 3 by the operation of the EA mechanism and the second vehicle-front side end portions 5b₂ are at right angles to each other.

As shown in Figs. 10(b) and 10(c), the first and second vehicle-front side end portions 5b₁ and 5b₂ are chamfered, in a manner similar to that in the embodiment shown in Fig. 1(c), and the corners of the chamfers are round.

Other structures of the guide anchor 1 in the ninth embodiment are the same as those in the above sixth embodiment.

In the guide anchor 1 of the ninth embodiment having such a configuration, since the inclination angle θ₃ of the first vehicle-front side end portions 5b₁ and the inclination angle θ_{b} of the direction of drawing of the seat belt 3 by the operation of the EA mechanism are set to be equal during the EA operation, a force F₃ that the seat belt 3 exerts on the vehicle-front side ends 5b of the ribs 5 is rarely produced when the seat belt 3 is drawn in the operating state of the EA mechanism, in a manner similar to that in the above-described embodiments. Therefore, a reactive force F₄ that moves the seat belt 3 toward the vehicle front side does not act from the vehicle-front side ends 5b onto the seat belt 3, and a reactive force that moves the seat belt 3 toward the vehicle front side does not act because of the chamfered and round portions, in a manner similar to that in the above first embodiment.

If the seat belt 3 exerts a force F₃ on the vehicle-front side ends 5b of the ribs 5, since the direction of drawing of the seat belt 3 by the operation of the EA mechanism and the first vehicle-front side end portions 5b₁ are in parallel with each other, and the belt drawing direction and the second vehicle-front side end portions 5b₂ are at right angles to each other, a component orthogonal to the first vehicle-front side end portions 5b1 is not produced in the force F₃. That is, a force for turning the guide anchor is not produced by the force F₃, or a little force is produced by the force F₃. Consequently, the guide anchor will not turn.

Other operation-effects of the guide anchor 1 of the ninth embodiment are the same as those in the above sixth embodiment.

The vehicle-front side ends 5b in the guide anchor 1 of the ninth embodiment may be provided with a large diameter R2, as shown in Fig. 1(b), instead of being chamfered. While the vehicle-front side ends 5b need not always be chamfered or have a large diameter R2 in the ninth embodiment, it is preferable to provide such chamfering or a large diameter R2 in order to reliably achieve the above desired operation-effects. The guide anchor 1 of the ninth embodiment is suitable particularly for a seat belt device having a pretensioner, in a manner similar to that in the sixth embodiment.

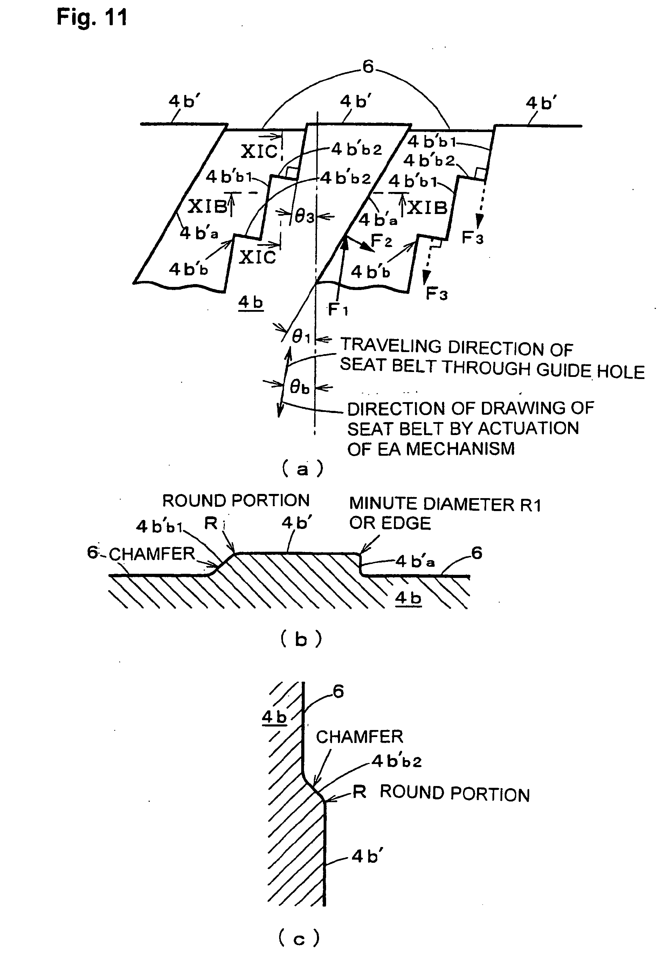

Figs. 11(a), 11(b), and 11(c) show a guide anchor according to a tenth embodiment of the present invention, Fig. 11(a) is a partial view similar to Figs. 2(a) and 2(b), Fig. 11(b) is a partially enlarged sectional view, taken along line XIB-XIB in Fig. 11(a), and Fig. 11(c) is a partially enlarged sectional view, taken along line XIC-XIC in Fig. 11(a).

While the vehicle-front side ends 4b'_{b} of the concave grooves 6 are linearly formed in the seventh embodiment shown in Fig. 8, vehicle-front side ends 4b'_{b} of concave grooves 6 in a guide anchor 1 of the tenth embodiment are formed in a stepped shape by a predetermined number of combinations first vehicle-front side end portions 4b'_{b1} having the same inclination angle θ₃ as that of the vehicle-front side ends 4b'_{b} of the eighth embodiment and second vehicle-front side end portions 4b'_{b2} disposed at right angles to the first vehicle-front side end portions 4b'_{b1}, as shown in Fig. 11(a). In this case, the relationship among the inclination angle θ₁ of vehicle-rear side ends 4b'ₐ, the inclination angle θ₃ of the first vehicle-front side end portions 4b'_{b1}, and the inclination angle of the traveling direction of a seat belt 3 through a belt guide hole, that is, the inclination angle θ_{b} of the direction of drawing of the seat belt 3 by the actuation of the EA mechanism (the belt drawing direction is opposite from the traveling direction through the belt guide hole) is set so that θ₃ = θ_{b} < θ₁, in a manner similar to that in the seventh embodiment. Therefore, the direction of drawing of the seat belt 3 by the actuation of the EA mechanism and the first vehicle-front side end portions 4b'_{b1} are in parallel with each other, and the direction of drawing of the seat belt 3 by the actuation of the EA mechanism and the second vehicle-front side end portions 4b_{b2} are at right angles to each other.

As shown in Figs. 11(b) and 11(c), the first and second vehicle-front side end portions 4b'_{b1} and 4b'_{b2} are chamfered, in a manner similar to that in the embodiment shown in Fig. 1(c), and the corners of the chamfers are round.

Other structures of the guide anchor 1 of the tenth embodiment are the same as those in the above eighth embodiment.

In the guide anchor 1 of the tenth embodiment having such a configuration, since the inclination angle θ₃ of the first vehicle-front side end portions 4b'_{b1} and the inclination angle θ_{b} of the direction of drawing of the seat belt 3 by the actuation of the EA mechanism are set to be equal during the EA operation, a force F₃ that the seat belt 3 exerts on the vehicle-front side ends 4b'_{b} of the concave grooves 6 is rarely produced when the seat belt 3 is drawn in the operating state of the EA mechanism, in a manner similar to that in the above-described embodiments. Therefore, a reactive force F₄ that moves the seat belt 3 toward the vehicle front side does not act from the vehicle-front side ends 4b'_{b} onto the seat belt 3, and a reactive force that moves the seat belt 3 toward the vehicle front side does not act because of the chamfered and round portions, in a manner similar to that in the above first embodiment.

If the seat belt 3 exerts a force F₃ on the vehicle-front side ends 4b'_{b} of the concave grooves 6, since the direction of drawing of the seat belt 3 by the actuation of the EA mechanism and the first vehicle-front side end portions 4b'_{b1} are in parallel with each other, and the belt drawing direction and the second vehicle-front side end portions 4b'_{b2} are at right angles to each other, a component orthogonal to the first vehicle-front side end portions 4b'_{b1} is not produced in the force F₃. That is, a force for turning the guide anchor is not produced by the force F₃, or a little force is produced by the force F₃. Consequently, the guide anchor will not turn.

Other operation-effects of the guide anchor 1 of the tenth embodiment are the same as those in the above eighth embodiment.

The vehicle-front side ends 4b'_{b} in the guide anchor 1 of the tenth embodiment may be provided with a large diameter R2, as shown in Fig. 1(b), instead of being chamfered. While the vehicle-front side end portions 4b'_{b} need not always be chamfered or have a large diameter R2 in the tenth embodiment, it is preferable to provide such chamfering or a large diameter R2 in order to reliably achieve the above desired operation-effects. The guide anchor 1 of the tenth embodiment is suitable particularly for a seat belt device having a pretensioner, in a manner similar to that in the eighth embodiment.

### [Advantages]

As is evident from the above description, In the seat-belt guide anchor of the invention as claimed in claim 1, when the seat belt is rapidly wound, for example, in response to the actuation of a pretensioner in case of an emergency such as a vehicle collision, the movement of the seat belt toward the vehicle front side is inhibited by the vehicle-rear side end of the projection or the vehicle-rear side end of the seat-belt sliding portion forming the recess. This makes it possible to more effectively and more reliably prevent the seat belt from being biased toward the vehicle front side. In particular, the seat-belt guide anchor as claimed in claim 1 can optimally prevent a seat belt from being biased in a seat-belt guide anchor of a seat belt device having a pretensioner.

In the seat-belt guide anchor as claimed in claim 1, when the seat belt is drawn while absorbing impact energy, for example, in response to the actuation of an EA mechanism in case of an emergency such as a vehicle collision, the movement of the seat belt toward the vehicle front side is inhibited by the vehicle-rear side end of the projection or the vehicle-rear side end of the seat-belt sliding portion forming the recess. This makes it possible to more effectively and more reliably prevent the seat belt from being biased toward the vehicle front side. In particular, the seat-belt guide anchor as claimed in claim 1 can optimally prevent a seat belt from being biased in a seat-belt guide anchor of a seat belt device that does not have a pretensioner, but has an EA mechanism.

Further, in the seat-belt guide anchor as claimed in claim 2, since the projection is shaped like a rib or the recess is shaped like a concave groove, the structure is simplified, and production is facilitated.

In the seat-belt guide anchor as claimed in claim 3, when the seat belt is rapidly wound, for example, in response to the actuation of a pretensioner in case of an emergency such as a vehicle collision, the movement of the seat belt toward the vehicle front side is inhibited by the first vehicle-rear side ends of the projections or the first vehicle-rear side ends of the seat-belt sliding portions forming the recesses. Furthermore, when the seat belt is drawn while absorbing impact energy, for example, in response to the actuation of an EA mechanism in case of an emergency such as a vehicle collision, the movement of the seat belt toward the vehicle front side is inhibited by the second vehicle-rear side ends of the projections or the second vehicle-rear side ends of the seat-belt sliding portions forming the recesses. This makes it possible to more effectively and more reliably prevent the seat belt from being biased toward the vehicle front side. In particular, the seat-belt guide anchor as claimed in claim 3 can optimally prevent the seat belt from being biased in a seat-belt guide anchor of a seat belt device that has at least one of a pretensioner and an EA mechanism.

In the seat-belt guide anchor as claimed in claim 4, since the vehicle-rear side end of the projection or the vehicle-rear side end of the sliding portion forming the recess is formed of a round portion having a minute diameter or of an edge portion, the movement of the seat belt toward the vehicle front side is more effectively inhibited by a reactive force produced from the vehicle-rear side end by the friction between the vehicle-rear side end and the seat belt.

In the seat-belt guide anchor as claimed in claim 5, since the vehicle-front side end of the projection or the vehicle-front side end of the sliding portion forming the recess is formed of a round portion having a large diameter, little friction occurs between the vehicle-front side end and the seat belt, and the movement of the seat belt toward the vehicle front side due to the vehicle-front side end is inhibited more effectively.

In the seat-belt guide anchor as claimed in claim 6, since the vehicle-front side end of the projection or the vehicle-front side end of the sliding portion forming the recess extends in the traveling direction of the seat belt through the belt guide hole, little friction occurs between the vehicle-front side end and the seat belt, and the movement of the seat belt toward the vehicle front side due to the vehicle-front side end is inhibited more effectively.

In the seat-belt guide anchor as claimed in claim 7, since the vehicle-front side end of the projection or the vehicle-front side end of the sliding portion forming the recess is formed in a stepped shape by a predetermined number of combinations of first vehicle-front side end portions parallel to the traveling direction of the seat belt through the belt guide hole and second vehicle-front side end portions perpendicular to the first vehicle-front side end portions, when the seat belt is drawn, the turning of the guide anchor is inhibited, and the movement of the seat belt toward the vehicle front side is inhibited.

## Claims

1. A seat-belt guide anchor (1),
the seat-belt guide anchor (1) being adapted to be swingably supported on a vehicle body and to guide a seat-belt (3) while said seat-belt (3) travels through a belt guide hole (4a),
wherein a plurality of projections (5, 7) or recesses (6) is formed in a sliding portion (4b) of said seat-belt guide anchor (1) for said seat-belt (3),
wherein vehicle-rear side ends (5a, 7a₁, 7a₂) of each projection (5,.7) or vehicle-rear side ends (4b'a) of each sliding portion (4b) forming each recess (6) are inclined with respect to a direction orthogonal to said belt guide hole (4a) in a state in which said seat-belt guide anchor (1) is mounted on said vehicle body and each form a same angle of inclination with respect to said direction orthogonal to said belt guide hole (4a),
**characterized in that**
each of said projections (5, 7) or recesses (6) is continuously formed from a passenger-side sliding portion (4b₁) to a retractor-side sliding portion (4b₂) of said seat-belt guide anchor (1), and
said angle of inclination of each vehicle-rear side end (5a, 7a₁, 7a₂) of each projection (5, 7) or said angle of inclination of each vehicle-rear side end (4b'a) of each recess (6) is set i) to be more or to be less than an angle between a traveling direction of said seat-belt (3) through said belt guide hole (4a) and said direction orthogonal to said belt guide hole (4a), or ii) to be opposite with respect to said angle between said traveling direction of said seat-belt (3) and said direction orthogonal to said belt guide hole (4a).

2. A seat-belt guide anchor according to claim 1, wherein said projection is shaped like a rib (5), or said recess is shaped like a concave groove (6).

3. A seat-belt guide anchor (1),
the seat-belt anchor (1) being adapted to be swingably supported on a vehicle body and to guide a seat-belt (3) while said seat-belt (3) travels through a belt guide hole (4a),
wherein a plurality of projections (5, 7) or recesses (6) is formed in a sliding portion (4b) of said seat-belt guide anchor (1) for said seat-belt (3),
**characterized in that** said projections (5, 7) or recesses (6) are parallellogrammatic,
wherein vehicle-rear side ends (7a) of said projections (7) or vehicle-rear side ends of said recesses include a first vehicle-rear side end (7a₁) and a second vehicle-rear side end (7a₂) in a state in which said seat-belt guide anchor (1) is mounted on said vehicle body,
said first vehicle-rear side end (7a₁) is inclined with respect to an orthogonal direction orthogonal to said belt guide hole (4a) disposed in said sliding portion (4b) for said seat belt (3), the angle of the inclination is set to be more than an angle between a traveling direction of said seat belt (3) through said belt guide hole (4a) and said orthogonal direction, and
said second vehicle-rear side end (7a₂) is inclined with respect to said orthogonal direction orthogonal to said belt guide hole disposed in said sliding portion for said seat belt, and the angle of the inclination is set to be less than the angle between the traveling direction of said seat belt (3) through said belt guide hole (4a) and said orthogonal direction, or the direction of the inclination is opposite with respect to said angle between said traveling direction of said seat-belt (3) and said orthogonal direction.

4. A seat-belt guide anchor according to any one of claims 1 to 3, wherein said vehicle-rear side end (5a, 7a) of said projection (5, 7) or said vehicle-rear side end (4b'a) of said sliding portion (4b) forming said recess (6) is formed of a round portion having a minute diameter (R1) or of an edge portion.

5. A seat-belt guide anchor according to any one of claims 1 to 4, wherein a vehicle-front side end (5b, 7b) of said projection (5, 7) or a vehicle-front side end (4b'b) of said sliding portion (4b) forming said recess (6) is formed of a round portion having a large diameter (R2) or of a chamfered portion.

6. A seat-belt guide anchor according to any one of claims 1 to 5, wherein a vehicle-front side end (5b) of said projection (5) or a vehicle-front side end (4b'b) of said sliding portion (4b) forming said recess (6) extends in the traveling direction of said seat belt (3) through said belt guide hole (4a).

7. A seat-belt guide anchor (1) according to any one of claims 1 to 5, wherein a vehicle-front side end (5b) of said projection (5) or a vehicle-front side end (4b'b) of said sliding portion (4b) forming said recess (6) is formed in a stepped shape by a predetermined number of combinations of first vehicle-front side end portions (4b' b₁, 5b₁) parallel to the traveling direction of said seat belt (3) through said belt guide hole (4a), and second vehicle-front side end portions (4b' b₂, 5b₂) perpendicular to said first vehicle-front side end portions (4b' b₁, 5b₁).

8. A seat-belt device comprising the seat-belt guide anchor (1) according to any one of the preceding claims and a seat-belt (3) guided by said seat-belt guide anchor (1).

## Patentansprüche

1. Sitzgurtführungsverankerung (1),
wobei die Sitzgurtführungsverankerung (1) derart ausgestaltet ist, dass sie schwenkbar an einem Fahrzeugkörper gehalten ist und einen Sitzgurt (3) führt während der Sitzgurt (3) durch ein Gurtführungsloch (4a) verläuft,
wobei mehrere Vorsprünge (5, 7) oder Vertiefungen (6) in einem Gleitabschnitt (4b) der Sitzgurtführungsverankerung (1) für den Sitzgurt (3) ausgebildet sind,
wobei bezüglich eines Fahrzeugs rückseitige Enden (5a, 7a₁, 7a₂) jedes Vorsprungs (5, 7) oder bezüglich des Fahrzeugs rückseitige Enden (4b'ₐ) jedes Gleitabschnitts (4b), welcher jeweils eine Vertiefung (6) ausbildet, bezüglich einer Richtung orthogonal zu dem Gurtführungsloch (4a) in einem Zustand mit einer Neigung angeordnet sind, in welchem die Sitzgurtführungsverankerung (1) an dem Fahrzeugkörper angebracht ist und jedes einen selben Neigungswinkel bezüglich der Richtung orthogonal zu dem Gurtführungsloch (4a) ausbildet,
**dadurch gekennzeichnet,**
**dass** jeder der Vorsprünge (5, 7) oder Vertiefungen (6) kontinuierlich von einem insassenseitigen Gleitabschnitt (4b₁) zu einem aufrollvorrichtungsseitigen Gleitabschnitt (4b₂) der Sitzgurtführungsverankerung (1) ausgebildet ist, und
**dass** der Neigungswinkel jedes bezüglich des Fahrzeugs rückseitigen Endes (5a, 7a₁, 7a₂) jedes Vorsprungs (5, 7) oder der Neigungswinkel jedes bezüglich des Fahrzeugs rückseitigen Endes (4b'ₐ) jeder Vertiefung (6) derart festgesetzt ist, i) dass er größer oder kleiner als ein Winkel zwischen einer Bewegungsrichtung des Sitzgurts (3) durch das Gurtführungsloch (4a) und der Richtung orthogonal zu dem Gurtführungsloch (4a) ist oder ii) dass er dem Winkel zwischen der Bewegungsrichtung des Sitzgurts (3) und der Richtung orthogonal zu dem Gurtführungsloch (4a) entgegengerichtet ist.

2. Sitzgurtführungsverankerung nach Anspruch 1, wobei der Vorsprung wie eine Rippe (5) geformt ist oder die Vertiefung wie eine konkave Vertiefung (6) geformt ist.

3. Sitzgurtführungsverankerung (1),
wobei die Sitzgurtverankerung (1) derart ausgestaltet ist, dass sie schwenkbar an einem Fahrzeugkörper gehalten ist und einen Sitzgurt (3) führt, während der Sitzgurt (3) durch ein Gurtführungsloch (4a) verläuft,
wobei mehrere Vorsprünge (5, 7) oder Vertiefungen (6) in einem Gleitabschnitt (4b) der Sitzgurtführungsverankerung (1) für den Sitzgurt (3) ausgebildet sind,
**dadurch gekennzeichnet,**
**dass** die Vorsprünge (5, 7) oder Vertiefungen (6) parallelogrammförmig sind,
wobei die bezüglich eines Fahrzeugs rückseitigen Enden (7a) der Vorsprünge (7) oder die bezüglich des Fahrzeugs rückseitigen Enden der Vertiefungen ein erstes bezüglich des Fahrzeugs rückseitiges Ende (7a₁) und ein zweites bezüglich des Fahrzeugs rückseitiges Ende (7a₂) in einem Zustand umfassen, in welchem die Sitzgurtführungsverankerung (1) an dem Fahrzeugkörper angebracht ist,
**dass** das erste bezüglich der Fahrzeugs rückseitige Ende (7a₁) bezüglich einer orthogonalen Richtung orthogonal zu dem Gurtführungsloch (4a), welches in dem Führungsabschnitt (4b) für den Sitzgurt (3) angeordnet ist, mit einer Neigung angeordnet ist, wobei der Neigungswinkel derart festgesetzt ist, dass er größer als ein Winkel zwischen einer Bewegungsrichtung des Sitzgurts (3) durch das Gurtführungsloch (4a) und der orthogonalen Richtung ist, und
**dass** das zweite bezüglich des Fahrzeugs rückseitige Ende (7a₂) bezüglich der orthogonalen Richtung orthogonal zu dem Gurtführungsloch, welches in dem Gleitabschnitt für den Sitzgurt angeordnet ist, mit einer Neigung angeordnet ist, und der Neigungswinkel derart festgesetzt ist, dass er geringer als der Winkel zwischen der Bewegungsrichtung des Sitzgurts (3) durch das Gurtführungsloch (4a) und der orthogonalen Richtung ist oder die Neigungsrichtung im Bezug auf den Winkel zwischen der Bewegungsrichtung des Sitzgurts (3) und der orthogonalen Richtung entgegengerichtet ist.

4. Sitzgurtführungsverankerung nach einem der Ansprüche 1 bis 3, wobei das bezüglich des Fahrzeugs rückseitige Ende (5a, 7a) des Vorsprungs (5, 7) oder das bezüglich des Fahrzeugs rückseitige Ende (4b'ₐ) des Gleitabschnitts (4b), welcher die Vertiefung (6) ausbildet, aus einem runden Abschnitt mit einem kleinen Durchmesser (R1) oder aus einem Kantenabschnitt ausgebildet ist.

5. Sitzgurtführungsverankerung nach einem der Ansprüche 1 bis 4, wobei ein bezüglich des Fahrzeugs vorderseitiges Ende (5b, 7b) des Vorsprungs (5, 7) oder ein bezüglich des Fahrzeugs vorderseitiges Ende (4b'_{b}) des Gleitabschnitts (4b), welcher die Vertiefung (6) ausbildet, aus einem runden Abschnitt mit einem großen Durchmesser (R2) oder aus einem abgeschrägten Abschnitt ausgebildet ist.

6. Sitzgurtführungsverankerung nach einem der Ansprüche 1 bis 5, wobei sich ein bezüglich des Fahrzeugs vorderseitiges Ende (5b) des Vorsprungs (5) oder ein bezüglich des Fahrzeugs vorderseitiges Ende (4b'_{b}) des Gleitabschnitts (4b), welcher die Vertiefung (6) ausbildet, in die Bewegungsrichtung des Sitzgurts (3) durch das Gurtführungsloch (4a) erstreckt.

7. Sitzgurtführungsverankerung (1) nach einem der Ansprüche 1 bis 5, wobei ein bezüglich des Fahrzeugs vorderseitiges Ende (5b) des Vorsprungs (5) oder ein bezüglich des Fahrzeugs vorderseitiges Ende (4b'_{b}) des Gleitabschnitts (4b), welcher die Vertiefung (6) ausbildet, in einer gestuften Form durch eine vorbestimmte Anzahl von Kombinationen von ersten bezüglich des Fahrzeugs vorderseitigen Endabschnitten (4b'_{b1}, 5b₁) parallel zu der Bewegungsrichtung des Sitzgurts (3) durch das Gurtführungsloch (4a) und von zweiten bezüglich des Fahrzeugs vorderseitigen Endabschnitten (4b'_{b2}, 5b₂) senkrecht zu den ersten bezüglich des Fahrzeugs vorderseitigen Endabschnitten (4b'_{b1}, 5b₁) ausgebildet ist.

8. Sitzgurtvorrichtung, welche die Sitzgurtführungsverankerung (1) nach einem der vorhergehenden Ansprüche und einen Sitzgurt (3), welcher durch die Sitzgurtführungsverankerung (1) geführt wird, umfasst.

## Revendications

1. Une ferrure de renvoi de ceinture de sécurité (1), la ferrure de renvoi de ceinture de sécurité (1) étant adaptée pour être supportée de façon oscillante sur une caisse de véhicule et pour guider une ceinture de sécurité (3), tandis que ladite ceinture de sécurité (3) se déplace à travers un trou de guidage pour ceinture (4a),
dans laquelle une pluralité de saillies (5, 7) ou de cavités (6) est formée dans une partie de coulissement (4b) de ladite ferrure de renvoi de ceinture de sécurité (1) pour ladite ceinture de sécurité (3),
dans laquelle lesdites extrémités de côté arrière de véhicule (5a, 7a₁, 7a₂) de chaque saillie (5, 7) ou extrémités de côté arrière de véhicule (5b'a) de chaque partie de coulissement (4b) formant chaque cavité (6) sont inclinées par rapport à une direction perpendiculaire audit trou de guidage pour ceinture (4a) en un état dans lequel ladite ferrure de renvoi de ceinture de sécurité (1) est montée sur ladite caisse de véhicule et chacun formant un même angle d'inclinaison par rapport à ladite direction, perpendiculairement audit trou de guidage pour ceinture (4a),
**caractérisée en ce que**
chacune desdites saillies (5, 7) ou cavités (6) est formée de façon continue à partir d'une partie de coulissement de côté passager (4b₁) à une partie de coulissement de côté rétracteur (4b₂) de ladite ferrure de renvoi de ceinture de sécurité (1), et
ledit angle d'inclinaison de chaque extrémité de côté arrière de véhicule (5a, 7a₁ , 7a₂) de chaque saillie (5, 7) ou ledit angle d'inclinaison de chaque extrémité de côté arrière de véhicule (4b'a) de chaque cavité (6) est fixé i) pour être supérieur ou inférieur à un angle entre une direction de déplacement de ladite ceinture de sécurité (3) à travers ledit trou de guidage pour ceinture (4a) et ladite direction perpendiculaire audit trou de guidage pour ceinture (4a), ou ii) être opposé par rapport audit angle, entre ladite direction de déplacement de ladite ceinture de sécurité (3) et ladite direction perpendiculaire audit trou de guidage pour ceinture (4a).

2. Une ferrure de renvoi de ceinture de sécurité selon la revendication 1, dans laquelle ladite saillie est conformée en nervure (5), ou ladite cavité est conformée en gorge concave (6).

3. Une ferrure de renvoi de ceinture de sécurité (1), la ferrure de renvoi de ceinture de sécurité (1) étant adaptée pour être supportée de façon oscillante sur une caisse de véhicule et pour guider une ceinture de sécurité (3), tandis que ladite ceinture de sécurité (3) se déplace à travers un trou de guidage pour ceinture (4a),
dans laquelle une pluralité de saillies (5, 7) ou de cavités (6) est formée dans une partie de coulissement (4b) de ladite ferrure de renvoi de ceinture de sécurité (1) pour ladite ceinture de sécurité (3),
**caractérisée en ce que** lesdites saillies (5, 7) ou cavités (6) sont conformées en parallélogrammes,
dans laquelle des extrémités de côté arrière de véhicule (7a) desdites saillies (7), ou des extrémités de côté arrière de véhicule desdites cavités, comprennent une première extrémité de côté arrière de véhicule (7a₁) et une deuxième extrémité de côté arrière de véhicule (7a₂), en un état dans lequel ladite ferrure de renvoi de ceinture de sécurité (1) est montée sur ladite caisse de véhicule,
ladite première extrémité de côté arrière de véhicule (7a₁) est inclinée par rapport à une direction perpendiculaire, perpendiculaire audit trou de guidage pour ceinture (4a), ménagé dans ladite partie de coulissement (4b) pour ladite ceinture de sécurité (3), l'angle d'inclinaison est fixé pour être supérieur à un angle, entre une direction de déplacement de ladite ceinture de sécurité (3) à travers ledit trou de guidage pour ceinture (4a) et ladite direction perpendiculaire, et
ladite deuxième extrémité de côté arrière de véhicule (7a₂) est inclinée par rapport à ladite direction orthogonale, orthogonale audit trou de guidage pour ceinture disposé dans ladite partie de coulissement pour ladite ceinture de sécurité, et l'angle d'inclinaison est fixé pour être inférieur à l'angle qu'il y a entre la direction de déplacement de ladite ceinture de sécurité (3) à travers ledit trou de guidage pour ceinture (4a) et ladite direction orthogonale, ou bien la direction de l'inclinaison est opposée par rapport audit angle entre ladite direction de déplacement de ladite ceinture de sécurité (3) et ladite direction orthogonale.

4. Une ferrure de renvoi de ceinture de sécurité selon l'une quelconque des revendications 1 à 3, dans laquelle ladite extrémité de côté arrière de véhicule (5a, 7a) de ladite saillie (5, 7), ou ladite extrémité de côté arrière de véhicule (4b'a) de ladite partie de coulissement (4b) formant ladite cavité (6), est formée d'une partie ronde ayant un petit diamètre (R1), ou d'une partie de bordure.

5. Une ferrure de renvoi de ceinture de sécurité selon l'une quelconque des revendications 1 à 4, dans laquelle une extrémité de côté avant de véhicule (5b, 7b) de ladite saillie (5, 7), ou une extrémité de côté avant de véhicule (4b'b) de ladite partie de coulissement (4b) formant ladite cavité (6), est formée d'une partie ronde ayant un grand diamètre (R2), ou d'une partie chanfreinée.

6. Une ferrure de renvoi de ceinture de sécurité selon l'une quelconque des revendications 1 à 5, dans laquelle une extrémité de côté avant de véhicule (5b) de ladite saillie (5) ou une extrémité de côté avant de véhicule (4b'b) de ladite partie de coulissement (4b) formant ladite cavité (6) s'étend dans la direction de déplacement de ladite ceinture de sécurité (3) à travers ledit trou de guidage pour ceinture (4a).

7. Une ferrure de renvoi de ceinture de sécurité (1) selon l'une quelconque des revendications 1 à 5, dans laquelle une extrémité de côté avant de véhicule (5b) de ladite saillie (5) ou une extrémité de côté avant de véhicule (4b'b) de ladite partie de coulissement (4b) formant ladite cavité (6) est formée de façon échelonnée par un nombre prédéterminé de combinaisons de premières parties d'extrémité de côté avant de véhicule (4b'b₁, 5b₁), parallèlement à la direction de déplacement de ladite ceinture de sécurité (3) à travers ledit trou de guidage pour ceinture (4a), et des parties de deuxième extrémité de côté avant de véhicule (4b'b₂, 5b₂) perpendiculairement auxdites premières parties d'extrémité de côté avant de véhicule (4b'b₁, 5b₁).

8. Un dispositif à ceinture de sécurité comprenant la ferrure de renvoi de ceinture de sécurité (1) selon l'une quelconque des revendications précédentes et une ceinture de sécurité (3) guidée par ladite ferrure de renvoi de ceinture de sécurité (1).
